**Europäisches Patentamt**

**European Patent Office**

**Office européen des brevets**

(11) Veröffentlichungsnummer: **0 081 720**
**A2**

(12) **EUROPÄISCHE PATENTANMELDUNG**

(21) Anmeldenummer: 82110928.7

(22) Anmeldetag: 26.11.82

(51) Int. Cl.³: **H 02 K 7/08, H 02 K 5/16,**
**H 02 K 7/116**

(30) Priorität: 11.12.81 DE 3149106

(43) Veröffentlichungstag der Anmeldung: 22.06.83
Patentblatt 83/25

(84) Benannte Vertragsstaaten: DE FR GB IT

(71) Anmelder: ROBERT BOSCH GMBH, Postfach 50,
D-7000 Stuttgart 1 (DE)

(72) Erfinder: Odendahl, Alfred, Dr.-Ing.,
Kohlbacherstrasse 7, D-7580 Bühl-Oberweiler (DE)
Erfinder: Nitzsche, Hartmut, Brombachweg 24,
D-7580 Bühl-Kappelwindeck (DE)
Erfinder: Mohr, Adolf, Dr.-Ing., Eichendorffweg 21,
D-7582 Bühlertal (DE)
Erfinder: Pfeifer, Wolfgang, Haabergstrasse 107,
D-7582 Bühlertal (DE)
Erfinder: Müller, Lothar, Im Kössler, D-7580 Bühl (DE)
Erfinder: Armbruster, Joachim, Beuernerstrasse 33,
D-7570 Baden-Baden (DE)
Erfinder: Böttler, Ernst, Dr.-Ing., Lurbaumstrasse 6,
D-7583 Ottersweier (DE)
Erfinder: Feser, Max, Riedboschweg 20, D-7580 Bühl
(DE)
Erfinder: Süss, Claus, Dipl.-Ing., Eichenstrasse 27,
D-7133 Maulbronn (DE)
Erfinder: Corbach, Rainer, Dr. Dipl.-Ing., Amthaus 2,
D-4710 Lüdinghausen (DE)

(54) Elektrische Kleinmaschine, insbesondere Kleinmotor.

(57) Es wird eine elektrische Kleinmaschine, insbesondere
ein elektrischer Kleinmotor vorgeschlagen, der zum Antreiben von Aggregaten dient. Der Antriebsmotor umfaßt ein
Gehäuse, das einen ringförmigen, magnetischen Rückschluß und wenigstens einen an einer Stirnseite des Rückschlußrings angeordneten Lagerträger hat. An dem Gehäuse ist eine Ankerwelle gelagert, die einen Motoranker
aufweist. Die Lagerung der Ankerwelle erfolgt durch wenigstens ein Lagerelement, welches in einer Aufnahme des
Lagerträgers sitzt. Das Lagerelement ragt zumindest mit
einem sich in Richtung der Ankerwellenachse erstreckenden Abschnitt über das Gehäuse hinaus, so daß dieser
Abschnitt als Paßsitz für eine an dem Antriebsmotor zu
befestigende Baugruppe verwendbar ist.

R.   ˙3˙

27.11.1981 Sa/Kc

ROBERT BOSCH GMBH, 7000 Stuttgart 1

## Elektrische Kleinmaschine, insbesondere Kleinmotor

Stand der Technik

Die Erfindung geht aus von einem elektrischen Kleinmotor nach der Gattung des Hauptanspruchs. Es ist schon ein solcher Motor bekannt, bei dem an den Rückschlußring ein Adapterring angepaßt ist, auf dem seinerseits dann eine Baugruppe aufgesetzt werden kann. Eine einwandfreie, zur Ankerwelle des Antriebsmotors zentrische Anpassung kann aber nur erreicht werden, wenn der am Rückschlußring vorhandene Paßsitz zur Ankerwelle zentrisch liegt. Dies ist aber bei elektrischen Kleinmaschinen regelmäßig nicht der Fall, weil schon allein aus Kostengründen der Rückschlußring aus einem Blechstreifen gebogen und damit nicht einwandfrei kreisförmig ist. Der Rückschlußring bedarf also bei derartigen Kleinmaschinen einer Nacharbeit zur Schaffung eines zur Ankerwelle zentrischen Aufnahmesitzes für den Adapterring.

Vorteile der Erfindung

Die erfindungsgemäße Kleinmaschine mit den kennzeichnenden Merkmalen des Hauptanspruchs hat demgegenüber den Vorteil, daß das zur Ankerwelle zwangsläufig absolut zentrisch lie-

...

gende Lagerelement zum Auffangen und Zentrieren einer
an der Kleinmaschine anzuordnende Baugruppe, beispielsweise eines Getriebes verwendet wird. Nacharbeiten am
Rückschlußring können demnach entfallen. Als weiterer
Vorteil ist anzusehen, daß auch auf den beim Stand der
Technik vorhandenen Adapterring und die mit diesem verbundenen Montagearbeiten verzichtet wird.

Durch die in den Unteransprüchen aufgeführten Maßnahmen
sind vorteilhafte Weiterbildungen und Verbesserungen der
im Hauptanspruch angegebenen elektrischen Kleinmaschine
möglich.

Zeichnung

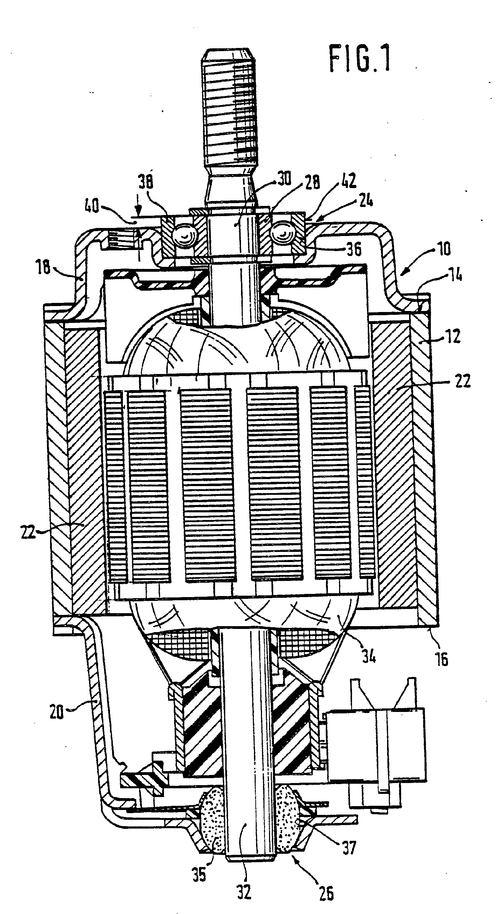

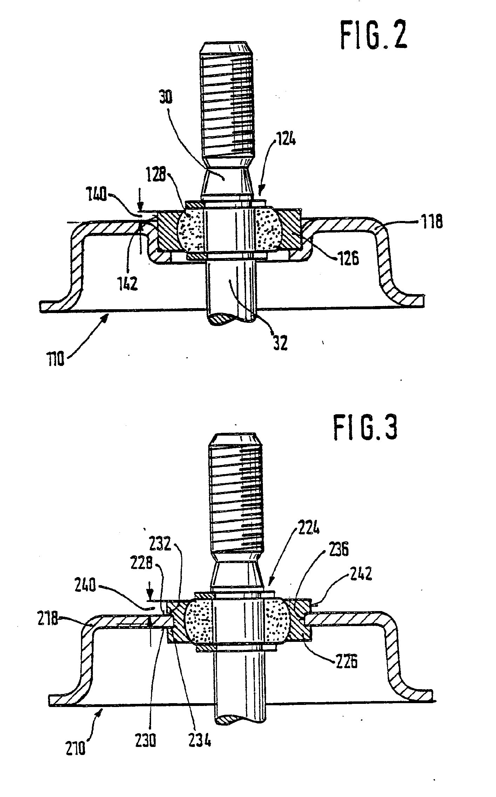

Ausführungsbeispiele der Erfindung sind in der Zeichnung
dargestellt und in der nachfolgenden Beschreibung näher
erläutert. Es zeigen Figur 1 einen Längsschnitt durch
einen elektrischen Kleinmotor, Figur 2 einen Teilschnitt
durch einen anders ausgebildeten elektrischen Kleinmotor
und Figur 3 eine dritte Ausführung eines elektrischen Kleinmotors im Teilschnitt.

Beschreibung der Ausführungsbeispiele

Ein in Figur 1 im Schnitt dargestellter elektrischer Kleinmotor dient beispielsweise zum Antreiben einer Verstelleinrichtung, wie sie im Kraftfahrzeug zum Verstellen eines
Schiebedachs usw. verwendet wird. Der Antriebsmotor 10
hat einen Aufbau und eine Dimensionierung, die ihn in
der Fachsprache als sogenannten Kleinmotor ausweist. Der
Antriebsmotor 10 ist mit einem ringförmigen, magnetischen
Rückschluß 12 ausgestattet, der aus einem Blechstreifen gerollt worden ist. Die Stoßstelle am Rückschlußring ist in an sich bekannter Weise verklinkt. Der Rückschlußring 12 ist an seinen beiden Stirnseiten 14 und 16 mit je einem bügelförmigen Lagerträger 18 und 20 versehen. Die Lagerträger 18 und 20 sind ebenfalls aus je einem Blechstreifen gebogen und an den Stirnseiten 14 und 16 des Rückschlußrings 12 befestigt. Der Rückschlußring 12 bildet zusammen mit den Lagerträgern 18 und 20 das Gehäuse des elektrischen Antriebsmotors 10. An dem Rückschlußring 12 sind das magnetische Feld erzeugende Permanentmagneten 22 angeordnet. An den Lagerträgern 18 und 20 sind je ein Wellenlager 24 und 26 gehalten. Das Wellenlager 24 ist durch ein Wälzlager gebildet, dessen Innenring 28 auf einem Endabschnitt 30 einer Ankerwelle 32 sitzt, die den zum Antriebsmotor 10 gehörenden Motoranker 34 trägt. Der Endabschnitt 30 der Ankerwelle 32 durchdringt den Lagerträger 18 und ragt somit aus dem Motorgehäuse 12, 18, 20. Das Wellenlager 26 besteht aus einer als Gleitlager ausgebildeten Kugelkalotte 35, die in einer pfannenförmigen Ausbuchtung 37 des Lagerträgers 20 einstellbar sitzt. Das Wälzlager 24 ist in einer nach außen offenen Einsenkung 36 angeordnet, die durch spanlose Verformung in den Lagerträger 18 eingebracht worden ist. Die Einsenkung 36 ist so dimensioniert, daß der Außenring 38 des Wälzlagers 24 in die Einsenkung 36 eintaucht und in dieser sitzt. Die Tiefe der Einsenkung 36 ist so bemessen, daß das Wälzlager 24 mit einem sich in Richtung der Achse der Ankerwelle 32 erstreckenden Abschnitt 40 über das Gehäuse 12, 18, 20 hinausragt. Wie Figur 1 weiter zeigt, sind der Endabschnitt 30 der Ankerwelle 32 und das Wellenlager 24 auf der selben des Motorengehäuses 12, 18, 20 angeordnet. Die Einsenkung 36 bildet also eine Aufnahme für das Wellenlager 24.

...

- 4 -

Der aus der Einsenkung 36 herausragende Abschnitt 40 des Wellenlagers 24 dient mit seiner Mantelfläche 42 als Zentrierpassung für eine an dem Antriebsmotor 10 zu befestigende Baugruppe, die beispielsweise durch ein Untersetzungsgetrieb gebildet sein kann.

Die Ausführungen gemäß den Figuren 2 und 3 stimmen im wesentlichen mit der eben beschriebenen Ausführungsform überein. Deshalb sind baugleiche Teile auch mit derselben Bezugszahl versehen worden wie beim Ausführungsbeispiel gemäß Figur 1.

Bei der Ausführungsform gemäß Figur 2 ist das Wellenlager 124 für die Ankerwelle 32 bzw. für deren Endabschnitt 30 als Kalottenlager ausgebildet. Das Kalottenlager 124 ist aus zwei Hälften 126 und 128 aufgebaut. Die äußere Hälfte 126 bildet die Lagerpfanne für die als Lagerkalotte ausgebildete zweite Lagerhälfte 128. Die Lagerhälfte 126 sitzt in der Einsenkung 36 des Lagerträgers 118 und ragt mit einem Abschnitt 140 aus der Einsenkung 36 in Richtung der Ankerwellenachse über das Gehäuse hinaus. Dabei bildet die äußere Wandfläche 142 der Lagerhälfte 126 einen Paßsitz für eine Gegenpassung, die an der mit dem Antriebsmotor 110 zu verbindenden Baugruppe angeordnet ist.

Auch die Ausführung gemäß Figur 3 weist ein Wellenlager 224 auf, das als Kalottenlager ausgebildet ist. Abweichend von den beiden anderen Ausführungsbeispielen ist dort jedoch der Lagerträger 218 mit einem Durchbruch 236 versehen, der als Aufnahme für die als Lagerpfanne ausgebildete äußere Lagerhälfte 226 des Kalottenlagers 224 dient. Zumindest bei diesem Ausführungsbeispiel ist die Lagerhälfte 226 aus einem Kunststoff gefertigt und in den Durchbruch 236 im Lagerträger 226 eingespritzt. Dabei sind die innen-

...

- 5 -

und außenliegenden Randbereiche 228, 230 des Durchbruchs 236 von Halterschultern 232 und 234 der Lagerhälfte 226 übergriffen. Bei diesem Ausführungsbeispiel dient die äußere Wandfläche 242 der äußeren Lagerhälfte 226 - im Bereich des über das Motorgehäuse hinausgehenden Abschnitts 240 - als Paßsitz für eine Gegenpassung an der mit dem Antriebsmotor 210 zu verbindenden Baugruppe.

Die äußeren Wand- oder Mantelflächen 42, 142, 242 der Wellenlager 24, 124, 224 sind so ausgeführt, daß sie alle Forderungen erfüllen, die an derartige Paß—sitze gestellt werden.

R. 17513

27.11.1981 Sa/Kc

0081720

ROBERT BOSCH GMBH, 7000 Stuttgart 1

Ansprüche

1. Elektrische Kleinmaschine, insbesondere Antriebsmotor, mit einem Gehäuse, das einen ringförmigen, magnetischen Rückschluß und wenigstens einen an einer Stirnseite des Rückschlußrings angeordneten Lagerträger hat, mit einem in dem Gehäuse umlaufenden, eine Ankerwelle aufweisenden Motoranker und mit einem in einer Aufnahme des Lagerträgers sitzenden Element zum Lagern der Ankerwelle, dadurch gekennzeichnet, daß das Lagerelement (24, 124, 224) zumindest mit einem sich in Richtung der Ankerwellenachse erstreckenden Abschnitt (40, 140, 240) über das vom Motorgehäuse (12, 18, 20 bzw. 12, 218) hinausragt.

2. Elektrische Kleinmaschine nach Anspruch 1, bei der die Ankerwelle mit einem Endabschnitt aus dem Gehäuse ragt, dadurch gekennzeichnet, daß der Abschnitt (40, 140, 240) des Lagerelements (24, 124, 224) und der Endabschnitt (30) der Ankerwelle (32) auf der selben Seite des Motorgehäuses (12, 18, 20 bzw. 12, 18 bzw. 12, 218) angeordnet sind.

3. Elektrische Kleinmaschine nach einem der Ansprüche 1 oder 2, dadurch gekennzeichnet, daß das Lagerelement ein Wälzlager (24) ist, dessen Außenring (38) in der als nach außen offene Einsenkung (36) ausgebildeten Aufnahme des Lagerträgers (18) gehalten ist.

...

4. Elektrische Kleinmaschine nach einem der Ansprüche 1 oder 2, dadurch gekennzeichnet, daß das Lagerelement ein Kalottenlager (124) ist, dessen die Lagerpfanne aufweisende Hälfte (126) in der als nach außen offenen Einsenkung (36) ausgebildeten Aufnahme des Lagerträgers (18) gehalten ist.

5. Elektrische Kleinmaschine nach einem der Ansprüche 3 oder 4, bei dem der Lagerträger als gebogenes Blechteil ausgebildet ist, dadurch gekennzeichnet, daß die Einsenkung (36) in den Lagerträger (18) spanlos eingeformt, insbesondere hineingezogen ist.

6. Elektrische Kleinmaschine nach einem der Ansprüche 1 oder 2, dadurch gekennzeichnet, daß die Aufnahme im Lagerträger ein Durchbruch (236) ist, in dem eine eine Lagerpfanne für eine Lagerkalotte (128) aufweisende Lagerhälfte (226) angeordnet ist.

7. Elektrische Kleinmaschine nach Anspruch 6, dadurch gekennzeichnet, daß die Lagerhälfte (226) in den Durchbruch (236) eingespritzt ist und die Durchbruchsränder (228, 230) mit Halterschultern (232, 234) übergreift.

8. Elektrische Kleinmaschine nach Anspruch 7, dadurch gekennzeichnet, daß die Lagerhälfte (226) aus einem Kunststoff besteht.

FIG.1

## FIG.2

## FIG.3